# EUROPÄISCHE PATENTSCHRIFT

(11) **EP 1 606 785 B1**
(45) Veröffentlichungstag und Bekanntmachung des Hinweises auf die Patenterteilung: **21.02.2007**
(21) Anmeldenummer: 04721890.4
(22) Anmeldetag: 19.03.2004
(51) Int. Cl.: G08G 5/06

(54) **FLUGHAFENBEFEUERUNGSEINHEIT UND -SYSTEM**
AIRPORTLIGHTING UNIT AND SYSTEM
UNITE ET SYSTEME D'ECLAIRAGE D'AEROPORTS

(30) Priorität: 20.03.2003 EP 03006362
(43) Veröffentlichungstag der Anmeldung: 21.12.2005
(73) Patentinhaber: SIEMENS AKTIENGESELLSCHAFT, 80333 München (DE)
(72) Erfinder: PIRSCHEL, Nils, 91353 Hausen (DE)
(86) Internationale Anmeldenummer: PCT/EP2004/002926
(87) Internationale Veröffentlichungsnummer: WO 2004/084154

(56) Entgegenhaltungen:
- US-A- 4 845 629
- US-A- 5 426 429

## Beschreibung

Die vorliegende Erfindung betrifft eine Flughafenbefeuerungseinheit mit einem Grundkörper, in dem Anschlusselemente zum Anschließen von Versorgungsleitungen, eine Leuchteinrichtung, eine Sensoreinrichtung, eine Schalteinrichtung und eine Kommunikationseinrichtung angeordnet sind. Die vorliegende Erfindung betrifft ferner ein Flughafenbefeuerungssystem mit einer Stromversorgungseinrichtung, einer der Stromversorgungseinrichtung zugeordneten Kommunikationszentrale und einer Zahl von Flughafenbefeuerungseinheiten, wobei die Flughafenbefeuerungseinheiten über Versorgungsleitungen mit der Stromversorgungseinrichtung verbunden sind.

Derartige Flughafenbefeuerungseinheiten und derartige Flughafenbefeuerungssysteme sind allgemein bekannt.

So ist z.B. aus der DE 101 04 950 A1 eine derartige Flughafenbefeuerungseinheit bekannt, bei der die Schalteinrichtung und die Kommunikationseinrichtung mit den Anschlusselementen verbunden sind. Die Schalteinrichtung ist von der Kommunikationseinrichtung in Abhängigkeit von über die Versorgungsleitungen an die Kommunikationseinrichtung übermittelten Steuersignalen schaltbar. Dadurch ist die Leuchteinrichtung mittels der Schalteinrichtung an die Anschlusselemente anschaltbar. Mittels der Sensoreinrichtung ist ein interner Betriebszustand der Leuchteinrichtung erfassbar und an die Kommunikationseinrichtung übermittelbar. Das Rohsignal ist dann in die Versorgungsleitungen einspeisbar. Aus dieser Schrift ist auch ein zugehöriges Flughafenbefeuerungssystem bekannt, bei dem auch die Kommunikationszentrale mit den Versorgungsleitungen verbunden ist.

Aus der DE 199 49 737 A1 ist ebenfalls eine solche Flughafenbefeuerungseinheit bekannt. Bei dieser Flughafenbefeuerungseinheit ist nur die Schalteinrichtung mit den Anschlusselementen verbunden. In Abhängigkeit von über einen separaten Kommunikationsweg übertragenen Steuersignalen ist die Schalteinrichtung von der Kommunikationseinrichtung schaltbar, so dass die Leuchteinrichtung mittels der Schalteinrichtung an die Anschlusselemente schaltbar ist. Mittels der Sensoreinrichtung ist ein außerhalb der Flughafenbefeuerungseinheit herrschender Zustand erfassbar und als Rohsignal an die Kommunikationseinrichtung übermittelbar. Von der Kommunikationseinrichtung ist das Rohsignal auswertbar und ein dadurch ermitteltes Nutzsignal über den separaten Kommunikationsweg übertragbar. Aus dieser Schrift ist auch ein korrespondierendes Flughafenbefeuerungssystem bekannt.

In der älteren, zum Anmeldezeitpunkt nicht vorveröffentlichten Deutschen Patentanmeldung 102 33 437.4 ist ebenfalls eine derartige Flughafenbefeuerungseinheit beschrieben. Bei dieser Flughafenbefeuerungseinheit sind sowohl die Schalteinrichtung als auch die Kommunikationseinrichtung mit den Anschlusselementen verbunden. Die Schalteinrichtung ist von der Kommunikationseinrichtung in Abhängigkeit von über die Versorgungsleitung an die Kommunikationseinrichtung übermittelten Steuersignalen schaltbar, so dass die Leuchteinrichtung mittels der Schalteinrichtung an die Anschlusselemente anschaltbar ist. Mittels der Sensoreinrichtung ist ein innerhalb der Flughafenbefeuerungseinheit herrschender Zustand erfassbar und an die Kommunikationseinrichtung übermittelbar. Der Zustand kann insbesondere den Betriebszustand der Leuchteinrichtung betreffen. Von der Kommunikationseinrichtung ist das Rohsignal in die Versorgungsleitungen einspeisbar. Die Steuersignale und das Nutzsignal werden als OFDM-Signale über die Versorgungsleitungen übertragen.

In der letztgenannten, nicht vorveröffentlichten Patentanmeldung ist ferner ein Flughafenbefeuerungssystem mit einer Stromversorgungseinrichtung, einer der Stromversorgungseinrichtung zugeordneten Kommunikationszentrale und einer Anzahl von Flughafenbefeuerungseinheiten beschrieben. Die Flughafenbefeuerungseinheiten sind über die gleichen Versorgungsleitungen sowohl mit der Stromversorgungseinrichtung als auch mit der Kommunikationszentrale verbunden.

Aus der US-A-5,426,429 ist eine Flughafenbefeuerungseinheit mit einem Grundkörper bekannt, der Anschlusselemente zum Anschließen von Versorgungsleitungen aufweist und in dem eine Leuchteinrichtung, eine Schalteinrichtung und eine Kommunikationseinrichtung angeordnet sind. Die Schalteinrichtung und die Kommunikationseinrichtung sind mit den Anschlusselementen verbunden. Die Schalteinrichtung ist von der Kommunikationseinrichtung in Abhängigkeit von über die Versorgungsleitungen an die Kommunikationseinrichtung übermittelten Steuersignalen schaltbar, so dass die Leuchteinrichtung mittels der Schalteinrichtung an die Anschlusselemente anschaltbar ist. An die Flughafenbefeuerungseinheit ist eine Sensoreinrichtung anschließbar, mittels derer ein außerhalb der Flughafenbefeuerungseinheit herrschender Zustand erfassbar und als Rohsignal an die Kommunikationseinrichtung übermittelbar ist. Von der Kommunikationseinrichtung ist das Rohsignal auswertbar und ein dadurch ermitteltes Nutzsignal in die Versorgungsleitungen einspeisbar.

Die Aufgabe der vorliegenden Erfindung besteht darin, eine Flughafenbefeuerungseinheit und ein hiermit korrespondierendes Flughafenbefeuerungssystem zu schaffen, bei denen auch komplexe, außerhalb der Flughafenbefeuerungseinheit herrschende Zustände einfach und dennoch sicher und zuverlässig erfassbar und an eine der Flughafenbefeuerungseinheit übergeordnete Kommunikationszentrale übermittelbar sind. Im Falle, dass die Flughafenbefeuerungseinheit über einen Transformator an einen Serienstromkreis angebunden ist, sollte die Datenübermittlung dabei im Wesentlichen unabhängig von der Länge einer Stichleitung vom Transformator zur Flughafenbefeuerungseinheit sein.

Die Aufgabe wird für die Flughafenbefeuerungseinheit durch die Gesamtheit der Merkmale des Anspruchs 1 gelöst. Insbesondere ist dabei durch das Auswerten des Rohsignals in der Kommunikationseinrichtung eine deutliche Datenreduktion und - aufarbeitung möglich. Durch das Übertragen des Nutzsignals als OFDM-Signal ist die Datensicherheit trotz eines hohen Datendurchsatzes ohne weiteres möglich.

Für das Flughafenbefeuerungssystem wird die Aufgabe durch die Merkmale des Anspruchs 11 gelöst.

Wenn die OFDM-Signale in einem Frequenzbereich zwischen 20 und 160 kHz übertragbar sind, arbeitet die Flughafenbefeuerungseinheit besonders zuverlässig. Denn unterhalb einer unteren Grenzfrequenz von 20 kHz treten Störungen durch thyristorgesteuerte Stromregler auf. Oberhalb einer oberen Grenzfrequenz von 160 kHz erschwert das Tiefpassverhalten des Übertragungsmediums (Kabel, Transformator) die Kommunikation.

Die OFDM-Signale sind in mehreren, sich nicht überlappenden Frequenzbändern übertragbar. Jedes Frequenzband weist dabei eine Bandbreite auf. Wenn die Kommunikationseinrichtung derart ausgebildet ist, dass die Bandbreite der Frequenzbänder parametrierbar ist, ist die genutzte Bandbreite an den geforderten Datendurchsatz und an die geforderte Datensicherheit anpassbar.

Wenn die Kommunikationseinrichtung derart ausgebildet ist, dass von ihr eine Signalübertragungsanforderung in die Versorgungsleitungen einspeisbar ist, ist ein aktives Melden einer Signalübertragung (im Gegensatz zu einem rein passiven Reagieren auf eine Anfrage durch die externe Kommunikationszentrale) möglich.

Alternativ oder zusätzlich ist es auch möglich, dass die Kommunikationseinrichtung derart ausgebildet ist, dass von ihr das Nutzsignal unaufgefordert in die Versorgungsleitungen einspeisbar ist.

Wenn die Kommunikationseinrichtung eine intelligente programmierbare Einheit, z.B. einen Mikroprozessor oder einen Mikrocontroller, aufweist, ist die Kommunikationseinrichtung und mit ihr die Flughafenbefeuerungseinheit flexibel anpassbar und/oder aktualisierbar.

Wenn die Kommunikationseinrichtung anhand des Rohsignals als Nutzsignal zumindest die An- bzw. Abwesenheit eines Objekts, insbesondere eines metallischen Objekts, z.B. eines Flugzeugs, ermittelt, ist die Flughafenbefeuerungseinheit für einen besonders häufigen Einsatzfall ausgebildet. Gegebenenfalls kann auch eine weitergehende Information über das Objekt, z.B. eine Klassifizierung bzw. Typisierung des Objekts, eine Geschwindigkeitsmessung oder eine Entfernungsmessung erfolgen.

Wenn die Sensoreinrichtung mindestens einen Magnetfeldsensor und/oder mindestens einen Radarsensor aufweist, ist sie besonders zuverlässig und kostengünstig herstellbar.

Alternativ oder zusätzlich kann die Kommunikationseinrichtung anhand des Rohsignals als Nutzsignal auch eine - insbesondere meteorologische - Umgebungseigenschaft, z.B. die Temperatur, die Windgeschwindigkeit oder Niederschlag, ermitteln.

Wenn den Anschlusselementen ein Transformator vorgeordnet ist, ist die Flughafenbefeuerungseinheit vorteilhafterweise an einen Serienstromkreis anschaltbar. Auf Grund der Verwendung von OFDM-Signalen zu Datenübertragungen kann dabei eine Stichleitung vom Transformator zur Flughafenbefeuerungseinheit eine Leitungslänge aufweisen, die 5 Meter übersteigt. Insbesondere kann die Stichleitung bis zu 200 Meter lang sein.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: ein Flughafenbefeuerungseinheit und
- FIG 2 - 4: je eine Flughafenbefeuerungseinheit.

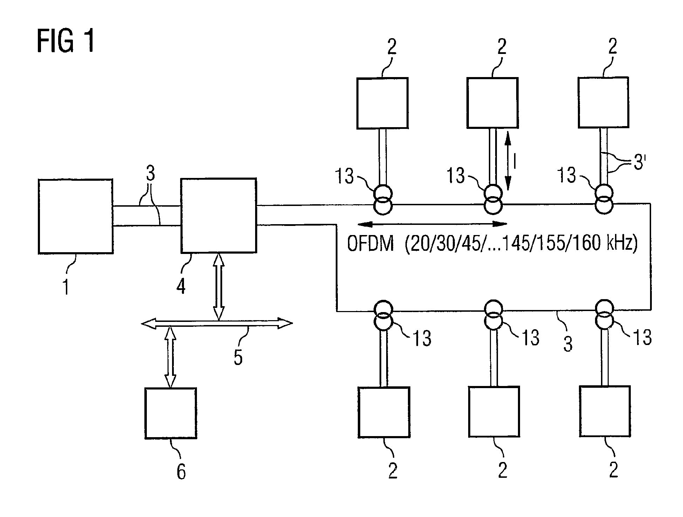

Gemäß FIG 1 weist ein Flughafenbefeuerungssystem eine Stromversorgungseinrichtung 1 und eine Anzahl von Flughafenbefeuerungseinheiten 2 auf. Die Flughafenbefeuerungseinheiten 2 sind mit der Stromversorgungseinrichtung 1 über Versorgungsleitungen 3 verbunden. Die Versorgungsleitungen 3 bilden dabei einen Serienstromkreis, an den die Flughafenbefeuerungseinheiten 2 angeschaltet sind. Die Versorgungsleitungen 3 könnten aber auch einen Parallelstromkreis bilden.

Der Stromversorgungseinrichtung 1 ist eine Kommunikationszentrale 4 zugeordnet. Die Kommunikationszentrale 4 ist in die Versorgungsleitungen 3 eingeschleift. Die Flughafenbefeuerungseinheiten 2 sind daher über ein- und dieselben Versorgungsleitungen 3 sowohl mit der Stromversorgungseinrichtung 1 als auch mit der Kommunikationszentrale 4 verbunden.

Die Kommunikationszentrale 4 ist - z.B. über ein lokales Verbindungsnetzwerk 5 mit einem Leitrechner 6 verbunden. Die Kommunikationszentrale 4 erhält vom Leitrechner 6 zum einen Sollwertvorgaben, die sie an die Flughafenbefeuerungseinheiten 2 weiterleitet. Zum anderen erhält sie von den Flughafenbefeuerungseinheiten 2 Zustandsmeldungen, die sie an den Leitrechner 6 weiterleitet. Der Leitrechner 6 ist dadurch in der Lage, ein Flughafenführungssystem zu bewirken, wie es beispielsweise in der DE 101 04 950 A1, der DE 199 49 737 A1 oder EP 0 883 873 B1 beschrieben ist.

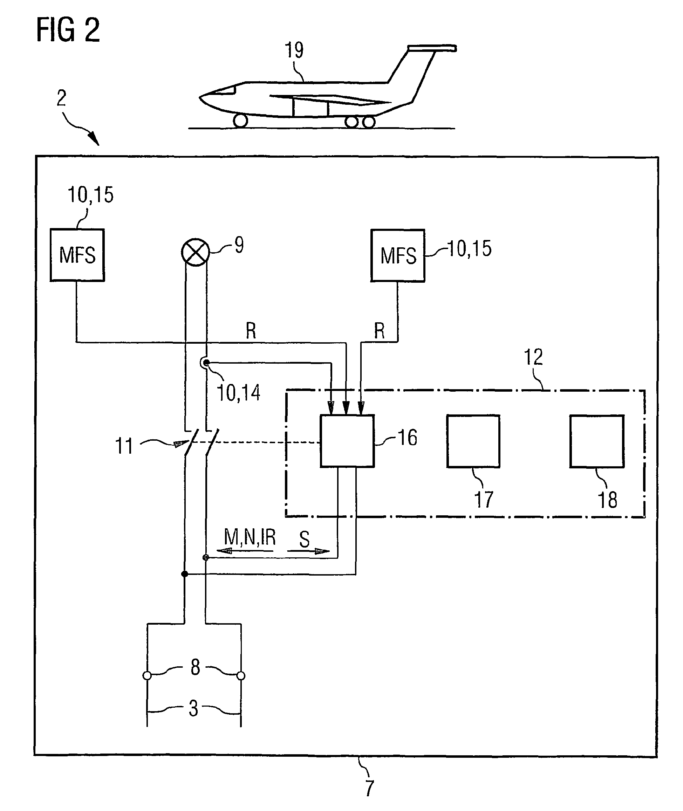

Gemäß FIG 2 weist jede Flughafenbefeuerungseinheit 2 einen Grundkörper 7 auf. Im Grundkörper 7 sind Anschlusselemente 8 zum Anschließen der Versorgungsleitungen 3, eine Leuchteinrichtung 9, eine Sensoreinrichtung 10, eine Schalteinrichtung 11 sowie eine Kommunikationseinrichtung 12 angeordnet. Die Leuchteinrichtung 9 weist dabei mindestens ein, gegebenenfalls auch mehrere Feuer auf. Die Sensoreinrichtung 10 weist mindestens einen Sensor auf. Die Schalteinrichtung 11 weist pro Lichtaustritt des Feuers einen Schalter auf.

Die Schalteinrichtung 11 und die Kommunikationseinrichtung 12 sind mit den Anschlusselementen 8 verbunden. Den Anschlusselementen 8 ist ein Transformator 13 vorgeordnet. Der Transformator 13 ermöglicht das in FIG 1 dargestellte Anschalten der Flughafenbefeuerungseinheiten 2 an den Serienstromkreis. Das Anschalten erfolgt dabei über Stichleitungen 3', die eine Leitungslänge 1 aufweisen. Die Leitungslänge 1 kann dabei größer als 5 Meter, insbesondere auch größer als 10 Meter sein. Im Einzelfall kann sie bis zu 200 Meter betragen, nach Möglichkeit sollten aber 100 bis 150 Meter nicht überschritten werden.

Von der Kommunikationszentrale 4 sind über die Versorgungsleitungen 3 Steuersignale S an die Kommunikationseinrichtung 12 übermittelbar. Die Übertragung der Steuersignale S erfolgt dabei, wie aus den FIG 1 und 2 ersichtlich ist, als OFDM-Signal, und zwar vorzugsweise in einem Frequenzbereich zwischen 20 und 160 kHz. Eine untere Grenzfrequenz von 30, besser 45 oder 55 kHz sollte dabei nicht unterschritten werden, eine obere Grenzfrequenz von 145 oder 155 kHz nicht überschritten.

In Abhängigkeit von den übermittelten Steuersignalen S wird die Schalteinrichtung 11 von der Kommunikationseinrichtung 12 geschaltet. Dadurch ist die Leuchteinrichtung 9 mittels der Schalteinrichtung 11 an die Anschlusselemente 8 anschaltbar bzw. von ihnen trennbar. Die Schalteinrichtung 11 ist dabei vorzugsweise als elektronische Schalteinrichtung 11 ausgebildet. Prinzipiell wäre aber auch eine Ausbildung als elektromechanische Schalteinrichtung 11 möglich.

Die Sensoreinrichtung 10 weist mindestens einen Sensor 14 und mindestens einen Sensor 15 auf. Mittels des Sensors 14 ist ein interner Zustand der Flughafenbefeuerungseinheit 2 erfassbar und an die Kommunikationseinrichtung 12 übermittelbar. Beispielsweise kann mittels des Sensors 14 erfasst werden, ob Strom durch die Leuchteinrichtung 9 fließt oder nicht. In Verbindung mit dem Sollschaltzustand der Leuchteinrichtung 9, der der Kommunikationseinrichtung 12 auf Grund des übermittelten Steuersignals S bekannt ist, kann diese somit ermitteln, ob die Leuchteinrichtung 9 defekt ist. Gegebenenfalls kann eine entsprechende Rückmeldung M (z.B. eingeschaltet - ausgeschaltet - Blinkbetrieb - defekt) von der Kommunikationseinrichtung 12 über die Versorgungsleitungen 3 an die Kommunikationszentrale 4 übermittelt werden. Auch die Rückmeldung M wird gegebenenfalls als OFDM-Signal über die Versorgungsleitungen 3 übertragen. Der Frequenzbereich ist dabei vorzugsweise der gleiche wie bei der Übertragung der Steuersignale S.

Mittels des Sensors 15 ist ein Zustand erfassbar, der außerhalb der Flughafenbefeuerungseinheit 2 herrscht. Dieses Signal ist als Rohsignal R an die Kommunikationseinrichtung 12 übermittelbar. Von dieser ist das Rohsignal R auswertbar und dadurch ein Nutzsignal N ermittelbar. Das Nutzsignal N ist auf die gleiche Weise wie die Rückmeldung M, also als OFDM-Signal im Frequenzbereich zwischen 30 (35, 45) und 160 (155, 145) kHz, in die Versorgungsleitungen 3 einspeisbar und so an die Kommunikationszentrale 4 übermittelbar.

Die Kommunikationseinrichtung 12 enthält gemäß FIG 2 eine intelligente programmierbare Einheit 16, z.B. einen Mikroprozessor oder einen Mikrocontroller. Der intelligenten Einheit 16 sind ein Programmspeicher 17 und ein Arbeitsspeicher 18 zugeordnet. Der Programmspeicher 17 ist ein Festwertspeicher. Er ist vorzugsweise elektrisch löschbar und neu beschreibbar. Dadurch ist - eventuell sogar über die Versorgungsleitungen 3 - ein Umprogrammieren der Kommunikationseinrichtung 12 möglich. Der Arbeitsspeicher 18 kann ein - eventuell gepufferter - flüchtiger Speicher (RAM) sein.

Die Übertragung der OFDM-Signale erfolgt in mehreren Frequenzbändern, die jeweils eine Bandbreite aufweisen, sich aber nicht überlappen. Durch das im Programmspeicher 17 hinterlegte Programm wird dabei insbesondere die Bandbreite der Frequenzbänder bestimmt. Die Kommunikationseinrichtung 12 ist also derart ausgebildet, dass die Bandbreite der Frequenzbänder parametrierbar ist.

Gemäß FIG 2 weist die Flughafenbefeuerungseinheit 2 zwei Sensoren 15 auf, die gemäß FIG 2 als Magnetfeldsensoren (MFS) ausgebildet sind. Mittels der Magnetfeldsensoren 15 von FIG 2 ist - insbesondere, wenn die Flughafenbefeuerungseinheit 2 in eine Start-, Lande- oder Rollbahn eines Flughafens eingebaut ist - auf einfache Weise die An- bzw. Abwesenheit eines Objekts 19 erfassbar. Dies gilt ganz besonders dann, wenn das Objekt 19 ein metallisches Objekt, z.B. ein Flugzeug 19 oder ein Kraftfahrzeug ist. Aber auch eine Detektion von Fremdobjekten 19 auf Lande- und Rollbahnen ist möglich.

Die Kommunikationseinrichtung 12 ist daher vorzugsweise derart programmiert, dass sie anhand des Rohsignals R ein Nutzsignal N ermittelt, das diese An- bzw. Abwesenheit anzeigt. Gegebenenfalls kann - bei entsprechend genauer Auswertung des Rohsignals R - auch eine feinere Unterscheidung des Nutzsignals N getroffen werden. Beispielsweise kann eine Typklassifizierung (A310 - B737 - DC10 - Kraftfahrzeug - anderes Objekt) erfolgen. Auf Grund des Vorhandenseins von zwei Sensoren 15 kann auch die Geschwindigkeit des Objekts 19 beim Überqueren der Flughafenbefeuerungseinheit 2 ermittelt werden.

Falls die Flughafenbefeuerungseinheiten 2 auf Grund einer Synchronisation mit einer gemeinsamen Zeitbasis arbeiten, ist es auch möglich, zusammen mit der Erfassung eines Objekts 19 jeweils die Erfassungszeit mit an die Kommunikationszentrale 4 zu übermitteln. In diesem Fall ist eine Geschwindigkeitsbestimmung des Objekts 19 auch dann möglich, wenn die Flughafenbefeuerungseinheiten 2 nur einen einzigen Magnetfeldsensor aufweisen.

Die Magnetfeldsensoren 15 erfassen das Erdmagnetfeld und dessen Verzerrung mindestens einachsig. Die Erfassungsachse ist dabei lotrecht. Bei einer zweiachsigen Erfassung erfolgt vorzugsweise zusätzlich eine Erfassung des Erdmagnetfeldes quer zur Rollrichtung. Bezüglich der Gründe hierfür wird auf die EP 1 193 662 A1, siehe dort Figur 5, verwiesen.

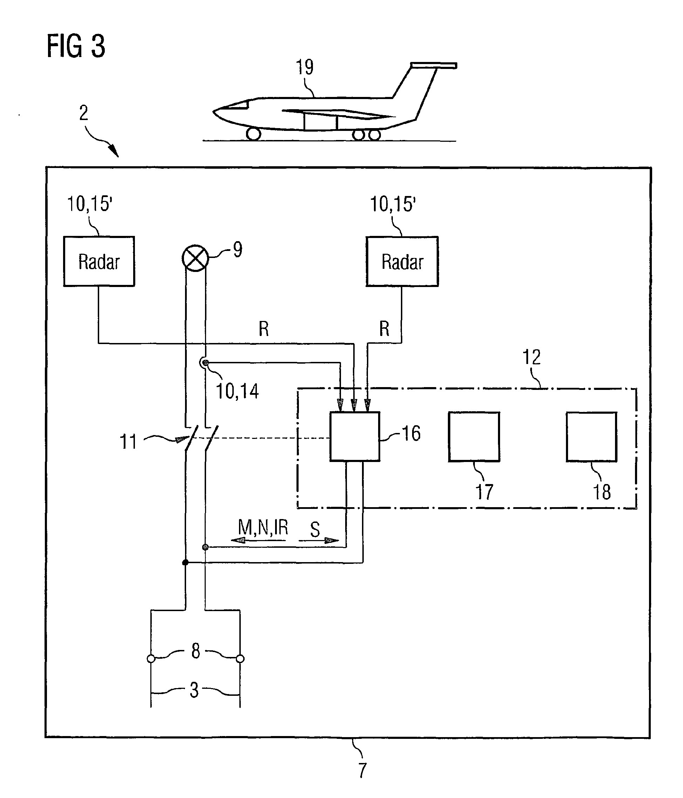

FIG 3 zeigt eine ähnliche Flughafenbefeuerungseinheit 2 wie FIG 2. Im Unterschied zu FIG 2 weist die Sensoreinrichtung 10 aber einen externen Sensor 15' auf, der als Radarsensor ausgebildet ist. Im Übrigen ist die Funktionsweise der Flughafenbefeuerungseinheit 2 von FIG 3 mit der von FIG 2 identisch.

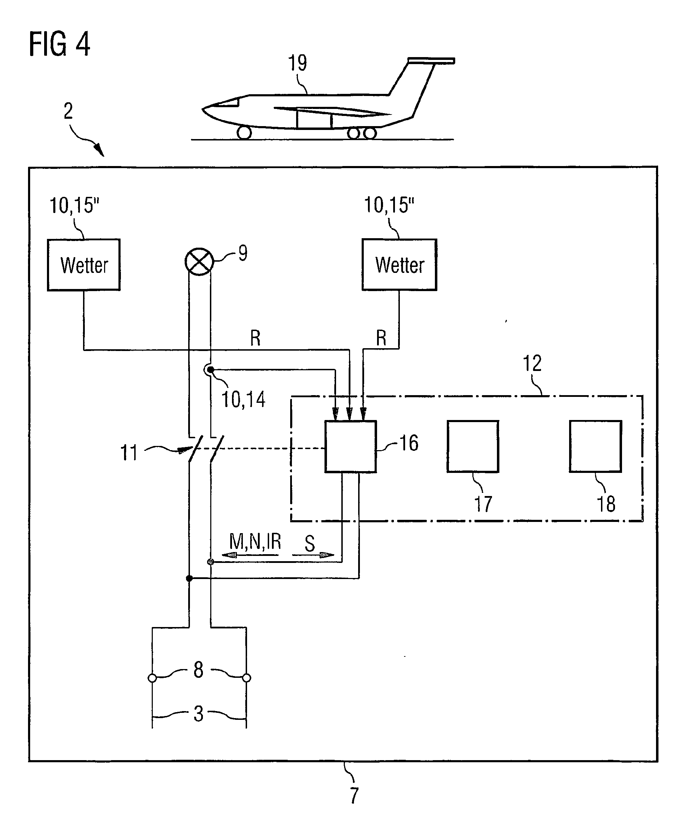

Alternativ oder zusätzlich zur Erfassung eines Objekts 19 gemäß den FIG 2 und 3 kann die Flughafenbefeuerungseinheit 2 - siehe FIG 4 - auch einen weiteren externen Sensor 15" enthalten. Dessen Rohsignal R wird von der Kommunikationseinrichtung 12 dadurch ausgewertet, dass diese daraus ein Nutzsignal N für eine meteorologische Umgebungseigenschaft ermittelt. Die meteorologische Umgebungseigenschaft kann beispielsweise die Temperatur, die Windgeschwindigkeit, Niederschlag (z.B. Regen, Schnee) oder Sichtverhältnisse (z.B. Tag/Nacht/Nebel) sein.

Mittels der Sensoreinrichtung 10 können - alternativ oder zusätzlich - auch andere Eigenschaften erfasst werden. Beispiele derartiger Eigenschaften sind Vibrationen, Geräusche, Luft- oder Bodenfeuchtigkeit und interne Zustände der Flughafenbefeuerungseinheit 2. Hierfür können insbesondere auch spezielle Sensoren verwendet werden. Ferner kann die Objekterfassung auch mit anderen als mit Radar- oder Magnetfeldsensoren erfolgen. Beispielsweise können optische Sensoren (insbesondere Kameras) verwendet werden.

In allen Fällen, also sowohl bei der Ausgestaltung gemäß FIG 2 als auch bei der Ausgestaltung gemäß FIG 3 oder der Ausgestaltung gemäß FIG 4, erfolgt also die Auswertung und Kategorisierung des Rohsignals durch die Kommunikationseinrichtung 12. Das Auswertungsergebnis wird dann von der Kommunikationseinrichtung 12 über die Versorgungsleitungen 3 an die Kommunikationszentrale 4 übermittelt.

Bei den Flughafenbefeuerungssystemen des Standes der Technik ist es bisher üblich, dass die Flughafenbefeuerungseinheiten 2 rein passive Komponenten sind. Die Kommunikationseinrichtungen 12 werden also von der Kommunikationszentrale 4 adressiert angesprochen und reagieren dann auf diese Adressierung.

Im Gegensatz hierzu sind die Kommunikationseinrichtungen 12 gemäß den FIG 2 bis 4 derart ausgebildet, dass sie auch eine Signalübertragungsanforderung, z.B. in Form eines Interrupt-Requests IR in die Versorgungsleitungen 3 einspeisen können. Wenn beispielsweise eine der Kommunikationseinrichtungen 12 einen Defekt der Leuchteinrichtung 9 bemerkt, speist sie die Signalübermittlungsanforderung IR in die Versorgungsleitungen 3 ein. Die Signalübermittlungsanforderung IR wird von der Kommunikationszentrale 4 empfangen und ausgewertet. Sie kann daher im nächsten Schritt zielgerichtet die Kommunikationseinrichtung 12 adressieren, welche die Signalübermittlungsanforderung IR gesendet hat. Die sendende Kommunikationseinrichtung 12 kann dabei gegebenenfalls zusätzlich zu ihrer Adresse auch einen Code mit übermitteln, anhand dessen die Kommunikationszentrale die Art der zu übermittelnden Signale erkennen kann. Beispielsweise können unterschiedliche Codes für eine Erkennung eines Objekts 19, für eine Änderung einer meteorologischen Erkennungseigenschaft oder für eine Änderung eines flughafenbefeuerungseinheitsinternen Zustands (z.B. Ausfall der Leuchteinrichtung 9) verwendet werden.

Es ist sogar möglich, dass die Kommunikationseinrichtungen 12 nicht nur einen Interrupt Request IR, sondern sofort das Nutzsignal N selbst in die Versorgungsleitungen 3 einspeisen. In diesem Fall muss allerdings eine Kollisionsüberwachung erfolgen, die aber von Rechnernetzen allgemein bekannt ist.

Die Transformatoren 13 sind für den Betrieb in dem Serienstromkreis optimiert. Sie sind im Wesentlichen zur Optimierung der Energieübertragung ausgelegt, nicht aber zur Optimierung der Signalübertragung. Sie dämpfen daher die übertragenen Signale S, M, N, IR relativ stark. Aus diesem Grund weisen die Kommunikationseinrichtungen 12 vorzugsweise Repeater zur Signalaufbereitung und -verstärkung sowie Mittel zur Messung der Empfangsstärke und -qualität der übertragenen Signale S, M, N, IR auf. Auch die Empfangsstärke und -qualität wird vorzugsweise über die Versorgungsleitungen 3 an die Kommunikationszentrale 4 übermittelt. Die Kommunikationszentrale 4 erhält somit stets ein Abbild des gesamten Kommunikationssystems. Durch die Auswertung der übermittelten Informationen über die Übertragungsqualität und die Signalstärke ist die Kommunikationszentrale 4 somit in der Lage, das gesamte Kommunikationssystem dynamisch - gegebenenfalls sogar optimal für jeden einzelnen Übertragungsvorgang - zu konfigurieren. Insbesondere kann die Kommunikationszentrale 4 durch Übermittlung entsprechender Steuersignale S festlegen, welche der Kommunikationseinrichtungen 12 jeweils Repeaterfunktionen wahrnehmen sollen und welche nicht. So wird stets eine hinreichende Übertragungsqualität im Kommunikationssystem gewährleistet. Gleichzeitig kann der dazu benötigte Aufwand an Energie und auch das Übersprechverhalten bzw. Hintergrundrauschen durch die dynamische Adaption des Kommunikationsnetzwerks optimiert werden.

## Patentansprüche

1. Flughafenbefeuerungseinheit mit einem Grundkörper (7), in dem Änschlusselemente (8) zum Anschließen von Versorgungsleitungen (3), eine Leuchteinrichtung (9), eine Sensoreinrichtung (10), eine Schalteinrichtung (11) und eine Kommunikationseinrichtung (12) angeordnet sind,
- wobei die Schalteinrichtung (11) und die Kommunikationseinrichtung (12) mit den Anschlusselementen (8) verbunden sind,
- wobei die Schalteinrichtung (11) von der Kommunikationseinrichtung (12) in Abhängigkeit von über die Versorgungsleitungen (3) an die Kommunikationseinrichtung (12) übermittelten Steuersignalen (S) schaltbar ist, so dass die Leuchteinrichtung (9) mittels der Schalteinrichtung (11) an die Anschlusselemente (8) anschaltbar ist,
- wobei mittels der Sensoreinrichtung (10) ein außerhalb der Flughafenbefeuerungseinheit herrschender Zustand erfassbar und als Rohsignal (R) an die Kommunikationseinrichtung (12) übermittelbar ist,
- wobei von der Kommunikationseinrichtung (12) das Rohsignal (R) auswertbar und ein **dadurch** ermitteltes Nutzsignal (N) in die Versorgungsleitungen (3) einspeisbar ist,
- wobei die Steuersignale (S) und das Nutzsignal (N) als OFDM-Signale über die Versorgungsleitungen (3) übertragbar sind.

2. Flughafenbefeuerungseinheit nach Anspruch 1,
**dadurch gekennzeichnet, dass** die OFDM-Signale (S, M, N, IR) in einem Frequenzbereich zwischen 20 und 160 kHz übertragbar sind.

3. Flughafenbefeuerungseinheit nach Anspruch 1 oder 2,
**dadurch gekennzeichnet, dass** die OFDM-Signale in mehreren, sich nicht überlappenden Frequenzbändern übertragbar sind und dass die Kommunikationseinrichtung (12) derart ausgebildet ist, dass die Bandbreite der Frequenzbänder parametrierbar ist.

4. Flughafenbefeuerungseinheit nach Anspruch 1, 2 oder 3,
**dadurch gekennzeichnet, dass** die Kommunikationseinrichtung (12) derart ausgebildet ist, dass von ihr eine Signalübertragungsanforderung (IR) in die Versorgungsleitungen (3) einspeisbar ist.

5. Flughafenbefeuerungseinheit nach Anspruch 1, 2 oder 3,
**dadurch gekennzeichnet, dass** die Kommunikationseinrichtung (12) derart ausgebildet ist, dass von ihr das Nutzsignal (N) unaufgefordert in die Versorgungsleitungen (3) einspeisbar ist.

6. Flughafenbefeuerungseinheit nach einem der obigen Ansprüche, **dadurch gekennzeichnet, dass** die Kommunikationseinrichtung (12) eine intelligente programmierbare Einheit (16), z.B. einen Mikroprozessor oder einen Mikrocontroller, aufweist.

7. Flughafenbefeuerungseinheit nach einem der obigen Ansprüche, **dadurch gekennzeichnet, dass** die Kommunikationseinrichtung (12) anhand des Rohsignals (R) als Nutzsignal (N) zumindest die An- bzw. Abwesenheit eines Objekts (19), insbesondere eines metallischen Objekts (19), z.B. eines Flugzeugs (19), ermittelt.

8. Flughafenbefeuerungseinheit nach einem der obigen Ansprüche, **dadurch gekennzeichnet, dass** die Sensoreinrichtung (10) mindestens einen Magnetfeldsensor (15) und/oder mindestens einen Radarsensor (15') aufweist.

9. Flughafenbefeuerungseinheit nach einem der obigen Ansprüche, **dadurch gekennzeichnet, dass** die Kommunikationseinrichtung (12) anhand des Rohsignals (R) als Nutzsignal (N) eine - insbesondere meteorologische - Umgebungseigenschaft, z.B. die Temperatur, die Windgeschwindigkeit oder Niederschlag, ermittelt.

10. Flughafenbefeuerungseinheit nach einem der obigen Ansprüche, **dadurch gekennzeichnet, dass** den Anschlusselementen (8) ein Transformator (13) vorgeordnet ist.

11. Flughafenbefeuerungssystem mit einer Stromversorgungseinrichtung (1), einer der Stromversorgungseinrichtung (1) zugeordneten Kommunikationszentrale (4) und einer Anzahl von Flughafenbefeuerungseinheiten (2) nach einem der obigen Ansprüche, wobei die Flughafenbefeuerungseinheiten (2) über die gleichen Versorgungsleitungen (3) sowohl mit der Stromversorgungseinrichtung (1) als auch mit der Kommunikationszentrale (4) verbunden sind.

12. Flughafenbefeuerungseinheit nach Anspruch 11,
**dadurch gekennzeichnet, dass** die Versorgungsleitungen (3) einen Serienstromkreis bilden, dass die Flughafenbefeuerungseinheiten (2) über Transformatoren (13) und Stichleitungen (3') an den Serienstromkreis angeschaltet sind und dass mindestens eine der Stichleitungen (3') eine Leitungslänge (1) zwischen 5 und 200 Meter aufweist.

## Claims

1. Airport navigation light unit comprising a base body (7) in which connection elements (8) are arranged for connecting supply lines (3), a lighting device (9), a sensor device (10), a switching device (11) and a communication device (12),
- wherein the switching device (11) and the communication device (12) are connected to the connection elements (8),
- wherein the switching device (11) can be switched by the communication device (12) according to control signals (S) which are transmitted via the supply lines (3) to the communication device (12) so the lighting device (9) can be switched on to the connection elements (8) by means of the switching device (11),
- wherein a state prevailing outside the airport navigation light unit can be detected by means of the sensor device (10) and transmitted as a raw signal (R) to the communication device (12),
- wherein the raw signal (R) can be evaluated by the communication device (12) and a useful signal (N) determined therefrom fed to the supply lines (3),
- wherein the control signals (S) and the useful signal (N) can be transmitted as OFDM signals via the supply lines (3).

2. Airport navigation light unit according to claim 1,
**characterised in that** the OFDM signals (S, M, N, IR) can be transmitted in a frequency range between 20 and 160 kHz.

3. Airport navigation light unit according to claim 1 or 2,
**characterised in that** the OFDM signals can be transmitted in a plurality of non-overlapping frequency bands and **in that** the communication device (12) is fashioned such that the bandwidth of the frequency bands can be parameterized.

4. Airport navigation light unit according to claim 1, 2 or 3,
**characterised in that** the communication device (12) is fashioned such that a signal transmission request (IR) can be fed by it to the supply lines (3).

5. Airport navigation light unit according to claim 1, 2 or 3,
**characterised in that** the communication device (12) is fashioned such that the useful signal (N) can be fed by it to the supply lines (3) unrequested.

6. Airport navigation light unit according to any one of the preceding claims,
**characterised in that** the communication device (12) has an intelligent programmable unit (16), e.g. a microprocessor or a microcontroller.

7. Airport navigation light unit according to any one of the preceding claims,
**characterised in that** the communication device (12) determines from the raw signal (R) as a useful signal (N) at least the presence or absence of an object (19), in particular of a metal object (19) e.g. an aircraft (19).

8. Airport navigation light unit according to any one of the preceding claims,
**characterised in that** the sensor device (10) has at least a magnetic-field sensor (15) and/or at least a radar sensor (15').

9. Airport navigation light unit according to any one of the preceding claims,
**characterised in that** the communication device (12) determines from the raw signal (R) as a useful signal (N) an - in particular meteorological - environmental characteristic, e.g. the temperature, the wind speed or precipitation.

10. Airport navigation light unit according to any one of the preceding claims,
**characterised in that** a transformer (13) is connected upstream of the connection elements (8).

11. Airport navigation light system comprising a power supply device (1), a central communication unit (4) assigned to the power supply device (1) and a plurality of airport navigation light units (2) according to any one of the preceding claims,
wherein the airport navigation light units (2) are connected via the same supply lines (3) both to the power supply device (1) and to the central communication unit (4).

12. Airport navigation light unit according to claim 11,
**characterised in that** the supply lines (3) form a series power supply circuit, **in that** the airport navigation light units (2) are connected via transformers (13) and spur lines (3') to the series power supply circuit and **in that** at least one of the spur lines (3') has a line length (1) of between 5 and 200 meters.

## Revendications

1. Unité de balisage d'aéroport ayant un corps de base (7) dans lequel se trouvent des éléments de raccordement (8) pour le raccordement de lignes d'alimentation (3), un dispositif d'éclairage (9), un dispositif capteur (10), un dispositif de commutation (11) et un dispositif de communication (12),
- le dispositif de commutation (11) et le dispositif de communication (12) étant reliés aux éléments de raccordement (8),
- le dispositif de commutation (11) étant commutable par le dispositif de communication (12) en fonction de signaux de commande (S) transmis par l'intermédiaire des lignes d'alimentation (3) au dispositif de communication (12) de telle sorte que le dispositif d'éclairage (9) peut être branché sur les éléments de raccordement (8) au moyen du dispositif de commutation (11),
- au moyen du dispositif capteur (10), un état qui règne à l'extérieur de l'unité de balisage d'aéroport pouvant être détecté et transmis comme signal brut (R) au dispositif de communication (12),
- le signal brut (R) pouvant être évalué par le dispositif de communication (12) et un signal utile (N) ainsi déterminé pouvant être introduit dans les lignes d'alimentation (3),
- les signaux de commande (S) et le signal utile (N) pouvant être transmis comme signaux OFDM par l'intermédiaire des lignes d'alimentation (3).

2. Unité de balisage d'aéroport selon la revendication 1, **caractérisée par le fait que** les signaux OFDM (S, M, N, IR) peuvent être transmis dans une plage de fréquence comprise entre 20 et 160 kHz.

3. Unité de balisage d'aéroport selon la revendication 1 ou 2, **caractérisée par le fait que** les signaux OFDM peuvent être transmis dans plusieurs bandes de fréquences qui ne se chevauchent pas et que le dispositif de communication (12) est conçu de telle sorte que la largeur des bandes de fréquences est paramétrable.

4. Unité de balisage d'aéroport selon la revendication 1, 2 ou 3, **caractérisée par le fait que** le dispositif de communication (12) est conçu de telle sorte qu'il peut introduire une demande de transmission de signal (IR) dans les lignes d'alimentation (3).

5. Unité de balisage d'aéroport selon la revendication 1, 2 ou 3, **caractérisée par le fait que** le dispositif de communication (12) est conçu de telle sorte qu'il peut introduire sans y être invité le signal utile (N) dans les lignes d'alimentation (3).

6. Unité de balisage d'aéroport selon l'une des revendications précédentes, **caractérisée par le fait que** le dispositif de communication (12) comporte une unité programmable intelligente (16), par exemple un microprocesseur ou un microcontrôleur.

7. Unité de balisage d'aéroport selon l'une des revendications précédentes, **caractérisée par le fait que** le dispositif de communication (12) détermine comme signal utile (N) à l'aide du signal brut (R) au moins la présence ou l'absence d'un objet (19), notamment un objet métallique (19), par exemple un avion (19).

8. Unité de balisage d'aéroport selon l'une des revendications précédentes, **caractérisée par le fait que** le dispositif capteur (10) comporte au moins un capteur de champ magnétique (15) et/ou au moins un capteur radar (15').

9. Unité de balisage d'aéroport selon l'une des revendications précédentes, **caractérisée par le fait que** le dispositif de communication (12) détermine comme signal utile (N) à l'aide du signal brut (R) une propriété de l'environnement - notamment météorologique -, par exemple la température, la vitesse du vent ou les précipitations.

10. Unité de balisage d'aéroport selon l'une des revendications précédentes, **caractérisée par le fait qu'**un transformateur (13) est placé du côté amont des éléments de raccordement (8).

11. Système de balisage d'aéroport comportant un dispositif d'alimentation en courant (1), un central de communication (4) associé au dispositif d'alimentation en courant (1) et un certain nombre d'unités de balisage d'aéroport (2) selon l'une des revendications précédentes, les unités de balisage d'aéroport (2) étant reliées par l'intermédiaire des mêmes lignes d'alimentation (3) aussi bien au dispositif d'alimentation en courant (1) qu'au central de communication (4).

12. Système de balisage d'aéroport selon la revendication 11, **caractérisé par le fait que** les lignes d'alimentation (3) forment un circuit de courant en série, que les unités de balisage d'aéroport (2) sont branchées sur le circuit de courant en série par l'intermédiaire de transformateurs (13) et de lignes de dérivation (3') et qu'au moins l'une des lignes en dérivation (3') a une longueur de ligne (1) comprise entre 5 et 200 mètres.
